(19) Europäisches Patentamt / European Patent Office / Office européen des brevets

(11) **EP 2 045 456 B1**

(12) **FASCICULE DE BREVET EUROPEEN**

(45) Date de publication et mention
de la délivrance du brevet:
**27.11.2019 Bulletin 2019/48**

(21) Numéro de dépôt: **08165545.8**

(22) Date de dépôt: **30.09.2008**

(51) Int Cl.:
*F02D 41/00* (2006.01)      *F02D 41/18* (2006.01)
*F01N 3/10* (2006.01)       *F02B 29/04* (2006.01)
*F02B 39/16* (2006.01)      *F01N 3/035* (2006.01)
*F01N 13/00* (2010.01)      *F02M 26/05* (2016.01)

(54) **Moteur thermique equipe d'un turbocompresseur de suralimentation et procede pour lutter contre le pompage du turbocompresseur**

Verfahren und Vorrichtung zur Vermeidung des Verdichterpumpens eines Turboladers einer Brennkraftmaschine

Method and apparatus for avoiding compressor surging of a turbocharger of an internal combustion engine

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **02.10.2007 FR 0757994**

(43) Date de publication de la demande:
**08.04.2009 Bulletin 2009/15**

(73) Titulaire: **PSA Automobiles SA
78300 Poissy (FR)**

(72) Inventeurs:
• **Hayat, Olivier
78000 Versailles (FR)**
• **Calendini, Pierre-Olivier
92210 Saint Cloud (FR)**

(74) Mandataire: **Ménès, Catherine et al
PSA Automobiles SA
VEIP - VV1400
Route de Gisy
78140 Vélizy Villacoublay (FR)**

(56) Documents cités:
WO-A-2005/047669     AT-U1- 1 097
US-A1- 2007 012 030     US-B1- 7 089 738

**Description**

L'invention concerne un moteur thermique équipé d'un turbocompresseur, ce turbocompresseur comprenant un compresseur pour comprimer un mélange gazeux à admettre en entrée du moteur et une turbine entraînant mécaniquement ce compresseur et située en sortie du moteur pour détendre les gaz d'échappement issus du moteur. Ce moteur est en outre équipé d'un circuit de recirculation pour récupérer des gaz d'échappement du moteur afin de les réinjecter en entrée du moteur.

Le mélange gazeux admis dans la chambre de combustion du moteur, est ainsi un mélange d'air frais et de gaz d'échappement re-circulés. L'intérêt de reconduire à l'admission les gaz d'échappement du moteur est de diminuer l'émission de substances polluantes telles que les oxydes d'azote dits Nox. En effet, ces Nox sont formés par la combinaison à haute température de l'oxygène et de l'azote contenus dans l'air frais alimentant le moteur. Ainsi, le fait de remplacer lors de certaines phases de fonctionnement du moteur, une partie de cet air par des gaz pauvres en oxygène, diminue la quantité d'oxygène disponible et ainsi la formation de Nox.

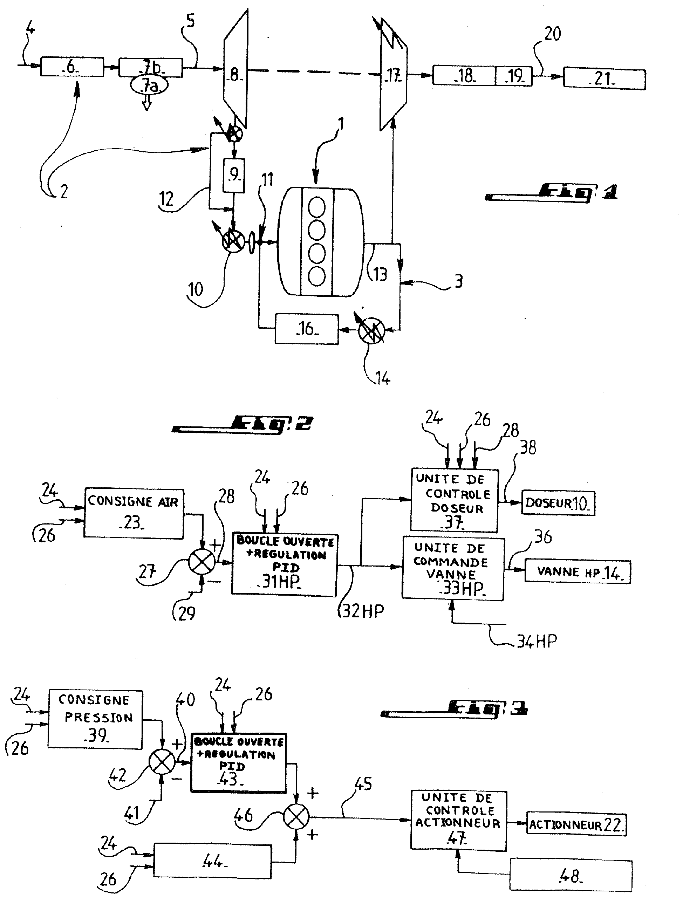

L'exemple de la figure 1 représente un moteur diesel suralimenté répondant à la définition ci-dessus. Ce moteur comprend une chambre de combustion 1 qui est alimentée d'une part en air 4 par un conduit d'admission 2 et d'autre part en gaz par un circuit de recirculation de ces gaz 3. Dans le conduit d'admission 2, l'air frais 4 est véhiculé au travers d'un filtre 6. Sa température et son débit massique sont mesurés respectivement par un capteur de température 7a et un capteur de débit massique (débitmètre) 7b, préalablement à l'introduction au sein du compresseur 8 de cet air 4. L'air comprimé issu du compresseur est soit refroidit par le refroidisseur 9 puis acheminé vers un doseur 10 soit directement véhiculé jusqu'à ce doseur 10 au moyen d'une conduite de dérivation 12, qui court-circuite le refroidisseur 9. L'air en sortie du doseur 10 circule jusqu'à une jonction de mélange 11 située en amont de l'admission de la chambre de combustion.

Le circuit 3 est agencé pour prélever les gaz d'échappement directement à la sortie 13 de la chambre de combustion 1 à laquelle ces gaz présentent une pression et une température élevées, et pour les acheminer vers la jonction de mélange 11. Pour ces raisons ce circuit constitue un circuit de recirculation dit haute pression, haute température. Il comprend une vanne de régulation 14, dite vanne EGR (acronyme de l'expression anglaise Exhaust Gaz Recirculation qui signifie re-circulation des gaz d'échappement), ainsi qu'un échangeur de chaleur 16.

Les gaz issus du moteur qui ne sont pas re-circulés sont acheminés vers la turbine 17 du turbocompresseur, au moyen de laquelle ces gaz sont détendus. Ces gaz dits basse pression BP sont épurés par l'intermédiaire d'un catalyseur 18 et filtrés par un filtre à particule 19, préalablement à leur évacuation au niveau de l'échappement 21 du véhicule. Cependant, une quantité trop importante de gaz re-circulés entraîne une augmentation des taux de suie, de monoxyde de carbone et d'hydrocarbure qui constituent à l'image des Nox, des substances polluantes. Ainsi, un contrôle précis de la quantité de gaz re-circulés est nécessaire pour gérer au mieux le compromis entre la diminution des émissions de Nox d'une part et l'augmentation des émissions de suie, de monoxyde de carbone et d'hydrocarbure d'autre part.

Ce contrôle est assuré par le pilotage de la vanne de régulation 14 du circuit 3 qui régule les proportions d'air et de gaz du mélange gazeux d'admission, tel que par exemple le pilotage illustré sur la figure 2. Le régulateur 31HP est apte à faire correspondre aux trois paramètres 24, 26, 28 qu'il reçoit, une consigne 32HP de position pour la vanne HP 14 de façon à jouer sur le débit d'air qui dépend de la position de la vanne 14 pour une pression d'admission et d'échappement du moteur qui est généralement fonction du régime moteur. Cette consigne de position 32HP est transmise à une unité de commande 33HP qui intègre également la position courante 34HP de la vanne 14 et qui communique en fonction de l'écart existant entre ces deux données 32, 34, une commande 36HP de déplacement de la vanne 14.

Cette consigne 32 peut également être transmise à une unité 37 de contrôle de la position du doseur d'air 10 qui réceptionne en outre les données relatives au régime courant du moteur 24, au débit de carburant à injecter 26 et l'information 28. L'unité 37 de contrôle peut alors calculer une commande 38 de la position du doseur 10 en fonction des données qu'elle reçoit.

En parallèle du contrôle du débit d'air, une régulation de la pression de suralimentation est réalisée en asservissant un actionneur de turbine à géométrie variable 22, tel qu'illustré sur la figure 3. Selon ce schéma, une consigne de pression de suralimentation 39 est déterminée à partir du régime courant du moteur 24 et de la consigne de débit du carburant à injecter 26 précités. Un comparateur 42 compare cette consigne 39 à une mesure de la pression courante de suralimentation 41 et transmet une information 40 représentant l'écart existant entre ces deux grandeurs à un régulateur PID 43.

En fonction de cette information 40, du régime courant du moteur 24 et de la consigne de débit du carburant à injecter 26, le régulateur 43 détermine la position particulière de l'actionneur de la turbine qui permet d'atteindre la pression de consigne 39. Cette donnée est associée à une information sur le pré positionnement 44 de l'actionneur 22 pour déterminer un signal 45 représentatif du déplacement nécessaire pour l'actionneur 22.

Une unité de contrôle 47 est alors utilisée pour déplacer l'actionneur 22 à la position souhaitée. Le contrôle de la position de l'actionneur 22 peut être amélioré lorsque le moteur comprend un capteur de position 48 de l'actionneur 22.

D'autres dispositifs peuvent être ajoutés aux contrôles de débit d'air et de pression de suralimentation pour diminuer encore les émissions de substances polluantes générées par le moteur.

Les régulations fonctionnent avec satisfaction pour un comportement normal des flux gazeux. Cependant il arrive d'observer un phénomène gênant qui peut se produire dans certains cas particuliers de régime ou de changement de régime de marche du véhicule. Un déséquilibre entre les pressions amont et avale du compresseur, provoquent une circulation à contre sens des gaz dans le compresseur. Cette circulation à contre sens réduit les performances du compresseur jusqu'à modifier suffisamment la pression avale pour que le compresseur rétablisse le sens normal de circulation des gaz mais malheureusement sans pouvoir maintenir ce sens normal. On appelle pompage du compresseur ce phénomène instable d'aller retour entre un sens de circulation des gaz et le sens inverse. Outre les instabilités qu'il provoque sur les régulations, ce phénomène a le fâcheux inconvénient d'abîmer les actionneurs et plus particulièrement le compresseur à cause des chocs produits par les écoulements opposés et souvent turbulents.

Pour contrer ce phénomène, les constructeurs automobiles introduisent des fonctionnalités supplémentaires. Lors de la conception des turbocompresseurs, un ajout de soupapes permettant une recirculation de l'air de la sortie vers l'entrée du compresseur, introduit un coût supplémentaire du turbocompresseur. Lors de la mise au point du moteur, une adoption de compromis de calibration, pénalise généralement les émissions du moteur. Lors de la conception du contrôle moteur, une introduction de fonctions de diagnostic anti-pompage, pose des difficultés de mise au point.

Une démarche parfois adoptée consiste à identifier un ou plusieurs régimes ou changements de régimes de marche du véhicule à l'occasion desquels un pompage du compresseur se produit et à agir sur de telles causes dans le but d'empêcher un pompage du compresseur. Un inconvénient est que de telles causes sont souvent lointaines, en d'autres termes elles touchent d'autres phénomènes que le seul phénomène de pompage et une action sur ces causes peut avoir des effets secondaires sur ces autres phénomènes ou constituer seulement un remède d'efficacité limitée. Un autre inconvénient est que rien ne garantit une exhaustivité dans la prise en compte de telles causes et un phénomène de pompage pourrait se produire pour une cause non envisagée.

Par exemple, la demande de brevet US2007/0012030 a proposé de fermer purement et simplement la vanne EGR et d'ouvrir lentement la vanne du circuit de suralimentation dans le cas particulier où le coefficient d'excès d'air passe de riche à maigre de façon à éviter un accroissement rapide du taux d'entrée d'air, ceci dans le but d'empêcher un pompage du compresseur. Le système proposé n'est pas pleinement satisfaisant car on est momentanément privé du bénéfice du circuit de recirculation qui est systématiquement fermé jusqu'à récupération de conditions plus favorables. Le brevet US7.089.738B1 propose un procédé ultérieur de commander un débit massique de gaz réinjectés.

L'invention vise à pallier les inconvénients mentionnés ci dessus en remédiant au phénomène de pompage quelque soit la cause lointaine à son origine.

A cet effet, l'invention concerne un moteur thermique comprenant une chambre de combustion, un compresseur pour comprimer un gaz extérieur à admettre en entrée de la chambre de combustion, un circuit de recirculation de gaz d'échappement afin de réinjecter une partie des gaz d'échappement en entrée de la chambre de combustion et une vanne de régulation disposée dans le circuit de recirculation et commandée par un boîtier électronique de façon à réguler un débit massique de gaz réinjectés.

Le moteur est remarquable en ce que le boîtier électronique est agencé pour ne pas dépasser un débit massique maximal de gaz haute pression réinjectés en fonction d'un débit massique minimal de gaz traversant le compresseur en deçà duquel le compresseur a tendance à pomper.

Dans un mode de réalisation préféré, le moteur comprend un capteur de vitesse de rotation et le boîtier électronique dispose de ressources de calcul ordonnancées pour calculer une consigne de débit massique maximal de gaz réinjectés en divisant une première valeur représentative d'une puissance maximale de recirculation par une température de gaz réinjectés, ladite première valeur étant obtenue en soustrayant d'une deuxième valeur représentative d'une puissance totale d'admission proportionnelle à la vitesse de rotation mesurée, une troisième valeur proportionnelle au débit massique minimal de gaz extérieur.

Particulièrement, le moteur comprend un capteur de pression de suralimentation et ladite deuxième valeur comprend un produit de la pression de suralimentation mesurée par ladite vitesse de rotation.

Particulièrement aussi, le moteur comprend un capteur de température de suralimentation et ladite troisième valeur comprend un produit de la température de suralimentation mesurée par ledit débit massique minimal de gaz extérieur.

Plus particulièrement, le boîtier électronique est agencé pour calculer le débit massique minimal en fonction d'un taux de compression du compresseur scruté en temps réel de façon à ne pas franchir une limite de pompage.

Avantageusement, le moteur comprend un capteur de pression en amont du compresseur et le boîtier électronique dispose de ressources de calcul ordonnancées pour calculer le taux de compression scruté en divisant une pression en aval du compresseur par une pression mesurée au moyen du capteur de pression.

L'invention concerne encore un procédé pour suralimenter un moteur par des gaz comprimés au moyen d'un compresseur et par des gaz réinjectés en régulant un débit massique de gaz réinjectés au moyen d'une vanne de régulation.

Le procédé est remarquable en ce qu'il comprend une étape limitative dans laquelle une consigne de débit massique maximal de gaz réinjectés est calculée en fonction d'un débit massique minimal de gaz extérieur en deçà duquel le compresseur a tendance à pomper.

De préférence, la consigne de débit massique maximal de gaz réinjectés est égale à une première valeur représentative d'une puissance maximale de recirculation divisée par une température de gaz réinjectés, ladite première valeur étant obtenue en soustrayant d'une deuxième valeur représentative d'une puissance totale d'admission proportionnelle à une vitesse de rotation du moteur, une troisième valeur proportionnelle au débit massique minimal de gaz extérieur.

Particulièrement la deuxième valeur comprend un produit d'une pression de suralimentation mesurée et de ladite vitesse de rotation et/ou la troisième valeur comprend un produit de la température de suralimentation mesurée et dudit débit massique minimal de gaz extérieur.

Avantageusement, le procédé comprend une étape adaptative dans laquelle le taux de compression est calculé en divisant une pression estimée en aval du compresseur par une pression mesurée en amont du compresseur.

L'invention sera mieux comprise, et d'autres caractéristiques et avantages de celle-ci apparaîtront au cours de la description suivante, faite en référence aux dessins annexés, dans lesquels :

- la figure 1 précitée représente une vue schématique d'un moteur thermique équipé d'un turbocompresseur de type connu,
- la figure 2 susmentionnée illustre un schéma de principe d'une régulation du débit d'air frais au sein du moteur de la figure 1,
- la figure 3 montre un schéma de principe d'une régulation de la pression de suralimentation du moteur de la figure 1,
- la figure 4 illustre une vue schématique d'un moteur thermique équipé d'un turbocompresseur, selon l'invention,
- la figure 5 représente des abaques de caractéristiques de turbocompresseur,
- la figure 6 montre des étapes de procédé pour estimer une pression avale du compresseur,
- la figure 7 montre des étapes de procédé pour calculer un débit minimal du compresseur,
- la figure 8 montre des étapes de procédé pour calculer un débit maximal de re-circulation dans le cadre de l'invention,
- la figure 9 est un schéma de régulation de l'alimentation gazeuse de la chambre de combustion.

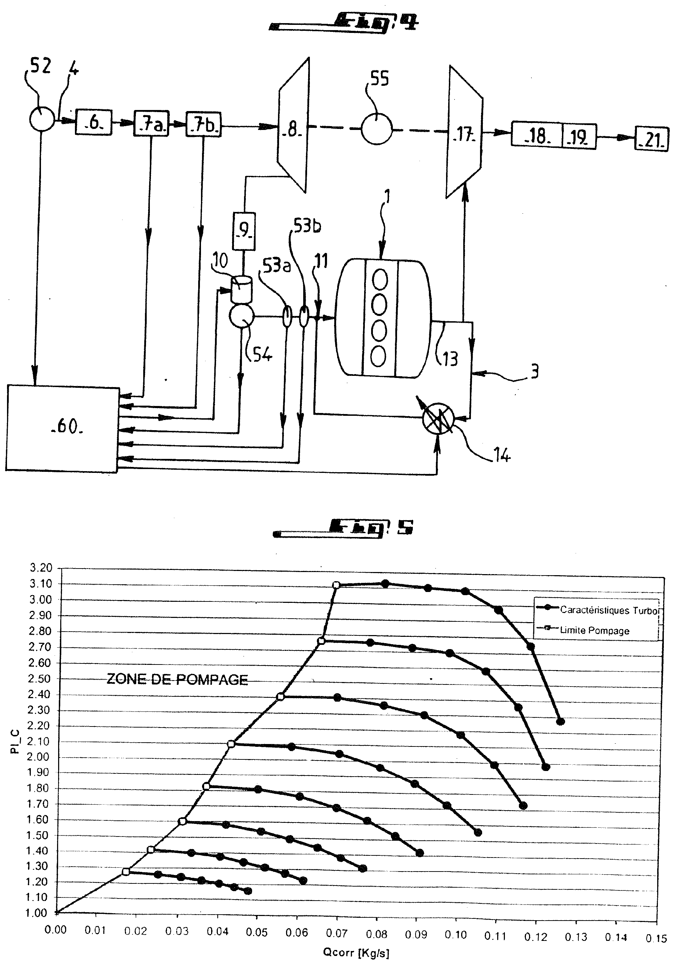

Le moteur selon l'invention représenté sur la figure 4 comprend en outre de ses éléments communs avec le moteur de l'état de la technique de la figure 1, un capteur de rotation 55 du moteur et un capteur de pression 52 pour mesurer la pression atmosphérique $P_{atm}$ en amont du compresseur 8.

Un capteur de température 53a et un capteur de pression 53b sont situés en aval du doseur 10 pour mesurer respectivement la température $T_{sural}$ et la pression $P_{sural}$ des gaz de suralimentation avant de les mélanger aux gaz recyclés. Le capteur de température 53a peut aussi être situé en amont et préférentiellement dans le voisinage du doseur 10. Les capteurs 52, 53a, 53b et 55 sont reliés à un boîtier de contrôle/commande électronique 60. Au boîtier 60 sont aussi reliés un capteur 54 pour mesurer une position d'ouverture $POS_{doseur}$ du doseur 10, le capteur 7a de température atmosphérique $T_{atm}$ et le débitmètre 7b pour mesurer un débit massique de gaz Qdébimètre en amont du compresseur 8.

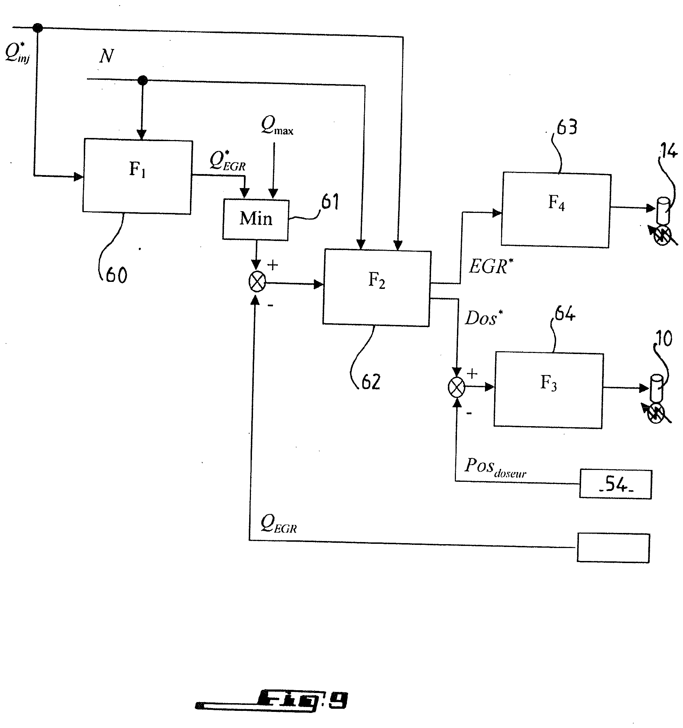

En référence à la figure 9, le boîtier 60 est agencé pour générer analogiquement ou numériquement une commande d'ouverture EGR* de la vanne 14 de façon à minimiser une erreur entre un débit massique de référence $Q_{EGR}^*$ de gaz d'échappement à réinjecter en entrée de la chambre de combustion 1 et un débit massique de gaz $Q_{EGR}$ mesuré ou estimé. Généralement, la commande d'ouverture EGR* est un signal électrique image du débit massique de référence $Q_{EGR}^*$ par un filtre F$_2$ qui comprend une amplification de la différence ($Q_{EGR}^*$-Q$_{EGR}$). Le débit massique de référence $Q_{EGR}^*$ est l'image par un filtre F$_1$ d'un débit d'injection de référence $Q_{inj}^*$. Le fonction de transfert du filtre F$_1$ est constamment adaptée par différents paramètres environnementaux du moteur tel que par exemple la vitesse de rotation N. Le débit d'injection de référence $Q_{inj}^*$, la vitesse de rotation N et d'autres paramètres environnementaux du moteur servent aussi à adapter en permanence le filtre F$_2$.

Le boîtier 60 conforme à l'invention est agencé de façon à ce que la commande d'ouverture EGR* soit constamment l'image d'un débit massique en référence inférieur à un débit massique maximal $Q_{max}$. Dans le mode de réalisation représenté en figure 9, cette particularité est réalisée au moyen d'un filtre 61 qui laisse systématiquement passer la valeur minimale parmi $Q_{EGR}^*$ et Q$_{max}$.

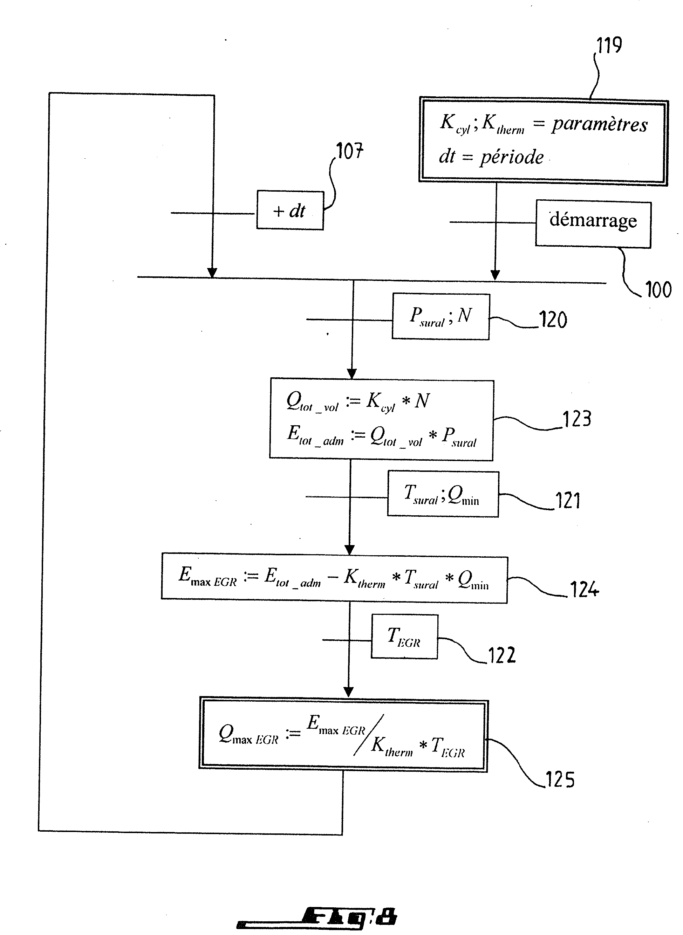

Dans le procédé conforme à l'invention, la valeur de débit massique maximal $Q_{max}$ est calculée en temps réel par un calculateur hébergé dans ou à l'extérieur du boîtier 60 de la manière expliquée à présent en référence à la figure 8.

Dans une étape initiale 119, le calculateur comprend en mémoire deux paramètres. Un paramètre $K_{cyl}$ est représentatif de la cylindrée du moteur. Connaissant la cylindrée $Cyl$, le rendement volumétrique $\eta_{vol}$ et le nombre de cylindres du moteur, il est possible de pré calculer le paramètre $K_{cyl}$ par exemple exprimé en m³minutes/seconde de la façon suivante pour un moteur à quatre cylindres :

$$K_{cyl} := \eta_{vol} * Cyl * 30$$

Un paramètre $K_{therm}$ est représentatif du comportement thermodynamique des gaz. En assimilant en première approximation les gaz comprimés et réinjectés à des gaz parfaits de masse molaire $M_n$, la constante R des gaz parfaits égale à 8,314 J·K⁻¹·mol⁻¹, permet de pré calculer le paramètre $K_{therm}$ par exemple exprimé en J·K⁻¹/kg de la façon suivante pour un gaz de masse molaire $M_n$ :

$$K_{therm} := R/M_n$$

Une connaissance de la vitesse de rotation N exprimée en tours par minutes, permet alors de calculer un débit total volumique $Q_{tot\_vol}$ aspiré par le moteur :

$$Q_{tot\_vol} := \eta_{vol} * Cyl * 30 * N$$

Selon le procédé expliqué à présent, le débit massique maximal $Q_{max}$ de gaz réinjectés à ne pas dépasser est déterminé en fonction d'un débit massique minimal $Q_{min}$ en deçà duquel le compresseur a tendance à pomper, du type :

$$Q_{max} = \frac{Q_{tot\_vol} * P_{sural} * K_{therm}^{-1} - T_{sural} * Q_{min}}{T_{EGR}}$$

Les étapes décrites à présent le sont à titre purement illustratif sans que leur enchaînement ou leur répartition soient limitatifs pour mettre en œuvre le procédé. Ce sont celles utilisées de préférence mais il est bien entendu que les termes d'une formule mathématique peuvent être agencées de différentes manière pour arriver au même résultat en faisant intervenir les mêmes prises en compte des lois physiques et par conséquent sans rien changer à l'enseignement de l'invention en ce qui concerne l'utilisation concrète des lois de la nature mises en œuvre.

Une transition 120 est validée par un échantillonnage de la pression de suralimentation $P_{sural}$ et de la vitesse de rotation N du moteur lors d'un top d'horloge temps réel. La validation de la transition 120 active une étape 123.

Dans l'étape 123, le débit total volumique $Q_{tot\_vol}$ en admission de la chambre de combustion constituée par les cylindres du moteur, est le volume moyen de gaz aspirés par seconde dans les cylindres pendant les 60 secondes nécessaires à faire N aller-retour de cylindres :

$$Q_{tot\_vol} := K_{cyl} * N$$

Une multiplication de ce débit volumique par la pression de suralimentation $P_{sural}$ est une valeur $E_{tot\_adm}$ représentative d'une puissance totale d'admission de gaz en entrée de la chambre de combustion en temps réel:

$$E_{tot\_adm} := Q_{tot\_vol} * P_{sural}$$

Une transition 121 est validée lors d'un top d'horloge temps réel par un échantillonnage de la température de suralimentation $T_{sural}$ et la communication du débit massique minimal $Q_{min}$ de gaz extérieur en deçà duquel le compresseur a tendance à pomper. La validation de la transition 121 active une étape 124.

Dans l'étape 124, un produit de la température de suralimentation mesurée par le débit massique minimal de gaz comprimés au moyen du compresseur représente, au facteur multiplicatif près $K_{therm}$, une puissance minimale d'alimentation en gaz comprimés en deçà de laquelle le compresseur entre dans une zone de pompage. Compte tenu de la puissance totale d'admission $E_{tot\_adm}$ qui est proportionnelle à la vitesse de rotation N du moteur, la puissance maximale $E_{\max EGR}$ possible est calculée au moyen de la formule :

$$E_{\max EGR} := E_{tot\_adm} - K_{therm} * T_{sural} * Q_{\min}$$

Si la puissance de gaz réinjectés dépassait la valeur $E_{\max EGR}$, la puissance totale d'admission $E_{tot\_adm}$ étant imposée par la vitesse de rotation du moteur, la puissance d'alimentation en gaz comprimés descendrait fatalement en dessous de celle qui provoque un pompage du moteur.

Pour éviter que la puissance de gaz réinjectés dépasse la valeur $E_{\max EGR}$, on prévoit avantageusement une étape 125 activée par une transition 122 qui est validée par prise en compte d'une température $T_{EGR}$ de gaz réinjectés. La température $T_{EGR}$ est soit mesurée, soit estimée en temps réel à partir de conditions de combustions connues.

Dans l'étape 125, le débit massique maximal $Q_{\max EGR}$ de gaz réinjectés à ne pas dépasser est calculé en divisant la puissance maximale par la température absolue de gaz re-circulés au moyen de la formule :

$$Q_{\max EGR} := \frac{E_{\max EGR}}{K_{therm} * T_{EGR}}$$

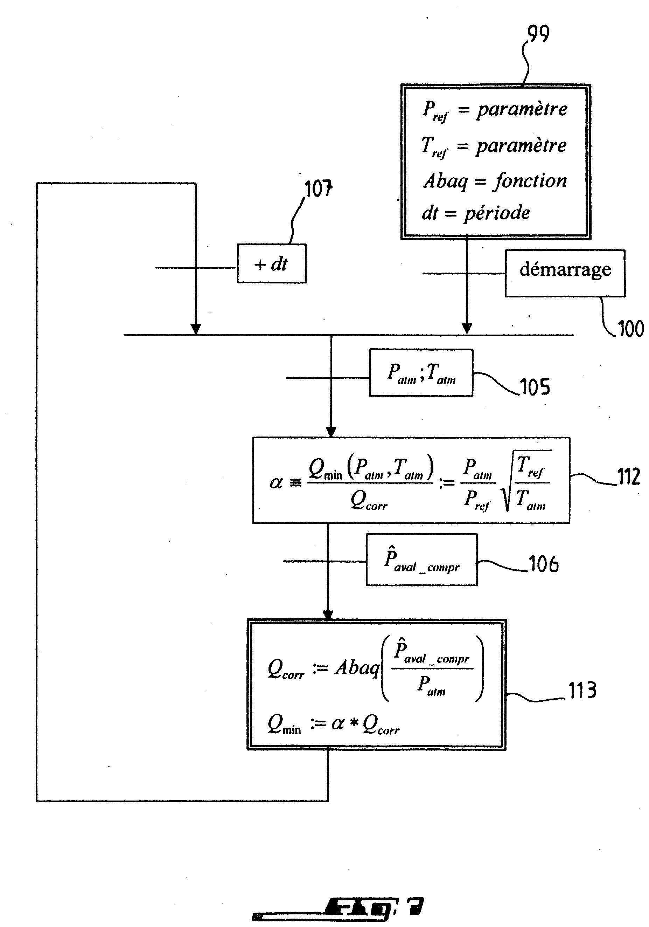

La valeur du débit massique minimal $Q_{\min}$ de gaz à comprimer peut être communiquée à partir de différentes sources possibles pour valider la transition 121. Une source préférée est décrite à présent en référence à la figure 7.

Dans une étape initiale 99, le calculateur comprend en mémoire des abaques de fonctionnement du turbocompresseur qui ont préalablement été mesurées dans des conditions de température amont $T_{ref}$ et de pression amont $P_{ref}$ pour lesquelles le calculateur est paramétré. Le calculateur a une période d'horloge temps réel dt.

Les abaques mémorisées sont expliquées à présent en référence à la figure 5 où un diagramme porte en abscisse un débit massique $Q_{corr}$ traversant le compresseur normalisé en fonction de la température et de la pression amont compresseur et porte en ordonnée un taux de compression Pi_C qui est le rapport de la pression avale sur la pression amont du compresseur.

Chaque courbe caractéristique correspond à un régime de fonctionnement du compresseur. A un régime donné, le taux de compression décroît légèrement en fonction du débit à faible débit puis la décroissance s'accentue lorsque le débit augmente. Contrairement à toute attente, on n'observe pas de taux de compression maximal à débit nul. Bien au contraire, il existe une limite de décrochage représentée par la courbe ascendante qui coupe les différentes caractéristiques. Plus le taux de compression est fort, plus élevé est le débit en deçà duquel on observe un phénomène de pompage (surging en anglais), c'est-à-dire une instabilité traduite par un mouvement alternatif de débit à contre courant. Par exemple, on observe dans le cas de la figure 5, une entrée en zone de pompage si le débit baisse en dessous de 0,07 Kg/s à un taux de compression de 3,10 ou en dessous de 0,03 Kg/s à un taux de compression de 1,60. Les turbulences dans la zone de pompage ne permettent plus d'établir une relation stable entre le taux de compression et le débit.

Les abaques sont par exemple mémorisées sous forme de tables associatives avec des correspondances entre régimes de fonctionnement, taux de compression et débits massiques traversant. Pour le mode de mise en œuvre ici exposé, il est suffisant de mémoriser un tableau à deux colonnes, la première étant attribuée au taux de compression et la seconde contenant le débit limite de pompage qui correspond au taux de compression figurant sur la même ligne de la première colonne de façon à reproduire la courbe ascendante de la figure 5.

Revenant à la figure 7, l'étape initiale 99 est quittée lorsqu'une transition 100 est validée par une mise en contact de démarrage. Une transition 105 est validée par un échantillonnage de la pression $P_{atm}$ et de la température $T_{atm}$ atmosphériques lors d'un top d'horloge temps réel. La validation de la transition 105 active une étape 112. L'étape 112 est agencée pour calculer un coefficient $\alpha$ de mise à l'échelle qui représente le rapport entre le débit réel dans les conditions de pression $P_{atm}$ et de température $T_{atm}$ atmosphériques échantillonnées et le débit correspondant dans les conditions de pression $P_{ref}$ et de température $T_{ref}$ des abaques de la figure 5.

Dans l'étape 112, la valeur du coefficient $\alpha$ est calculée au moyen de la formule :

$$\alpha := \frac{P_{atm}}{P_{ref}} \sqrt{\frac{T_{ref}}{T_{atm}}}$$

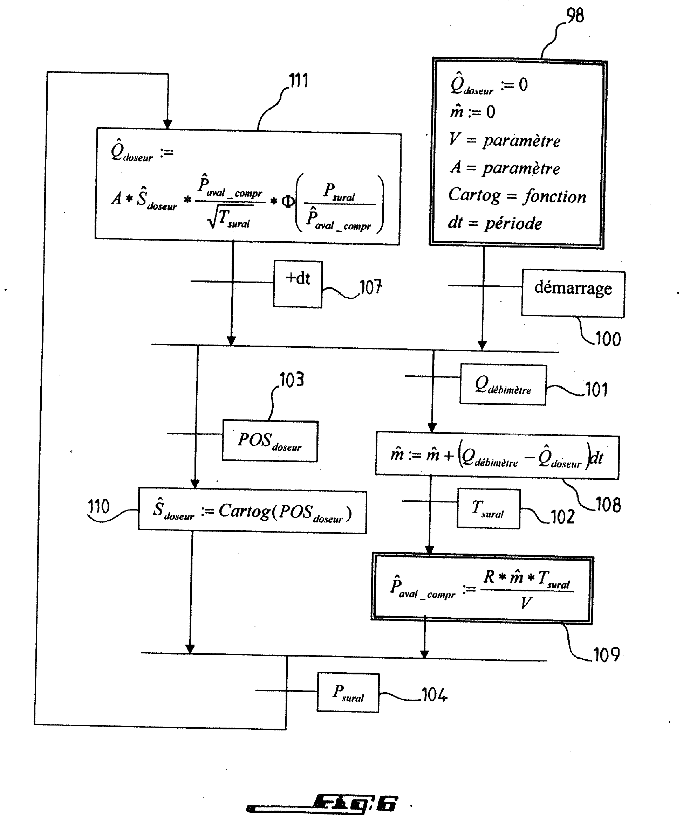

Une transition 106 est validée par une communication de la pression observable au même instant en aval du compresseur. La pression en aval peut être obtenue au moyen d'un échantillonnage sur un capteur de pression lors d'un top d'horloge temps réel sous réserve d'avoir préalablement installé un capteur de pression en aval du compresseur mais en amont de toute perte de charge subséquente. Pour éviter l'installation d'un capteur supplémentaire avec les répercussions que l'on sait sur le câblage et les risques de pannes, la pression en aval est obtenue par estimation telle que celle décrite plus loin en référence à la figure 6. La validation de la transition 106 active une étape 113.

L'étape 113 est agencée pour calculer le débit $Q_{min}$ en dessous duquel ne pas descendre pour éviter le pompage. La pression avale communiquée au passage de la transition 106, est divisée par la pression atmosphérique échantillonnée au passage de la transition 105. Le taux de compression ainsi calculé adresse une ligne « Abaq » de tableau mémorisé de laquelle est extraite une valeur Qcorr de débit limite de pompage. La valeur extraite est celle pour laquelle ce taux de compression a été calculé avec une pression et une température en amont du compresseur égales respectivement à la pression de référence $P_{ref}$ et à la température de référence $T_{ref}$. Une multiplication par le coefficient $\alpha$ permet d'obtenir le débit $Q_{min}$ pour une pression et une température en amont du compresseur égales respectivement à la pression atmosphérique $P_{atm}$ et à la température atmosphérique $T_{atm}$ mesurées.

Une transition 107 validée par un top d'horloge dans un intervalle de temps dt suivant, réactive la série de transitions et d'étapes 105, 112, 106 et 113 de sorte que la valeur de débit minimal converge en temps réel vers le débit $Q_{min}$ pour une pression et une température en amont du compresseur égales respectivement à la pression atmosphérique $P_{atm}$ et à la température atmosphérique $T_{atm}$ mesurées. Pour s'assurer de ne pas franchir la limite de pompage, on peut ajouter un talon de sécurité à la valeur calculée.

Dans le cas préféré où la pression en aval du compresseur qui valide en temps réel la transition 106, est une pression avale estimé $\hat{P}_{aval\_compr}$, la pression en aval du compresseur est calculée par exemple au moyen des étapes de procédé décrites à présent en référence à la figure 6. Un vecteur de valeurs $Q_{débitmètre}$, $T_{sural}$, $POS_{doseur}$ échantillonnées en temps réel, valide un vecteur de transitions 101, 102, 103. Les valeurs $Q_{débitmètre}$, $T_{sural}$, $POS_{doseur}$ sont mesurées respectivement par les capteurs 7b, 53a et 54.

Dans une étape initiale 98, le calculateur comprend en mémoire tout ou partie des données suivantes selon l'alternative de réalisation choisie pour mettre en œuvre l'invention. Un débit doseur estimé $\hat{Q}_{doseur}$ et une masse accumulée estimée $\hat{m}$ sont initialisés à zéro. Une valeur V de volume depuis la sortie du compresseur 8 jusqu'au doseur 10 et une constante A sont paramétrées en fonction de la géométrie du moteur. Une cartographie Cartog est mémorisée sous forme analytique ou de tableau pour estimer une section efficace de doseur $\hat{S}_{doseur}$ en fonction d'une position d'ouverture de doseur $POS_{doseur}$. Le calculateur a une période d'horloge temps réel dt. On entend par section efficace la section d'une ouverture équivalente en termes de débit gazeux à l'ouverture effective du doseur obturée par un volet dont la position est celle attribuée au doseur.

L'étape initiale 98 est quittée lorsque la transition 100 est validée par une mise en contact de démarrage. La transition 101 active une étape 108 ordonnancée pour calculer une valeur temps réel de masse estimée $\hat{m}$ de gaz accumulée entre la sortie du compresseur 8 et l'entrée du doseur 10. La masse accumulée est l'intégrale de la différence entre le débit massique en sortie du compresseur et le débit massique traversant le doseur. En absence de fuite, le débit massique en sortie du compresseur est égal au débit massique $Q_{débitmètre}$ mesuré en entrée du compresseur. Si on dispose d'un débitmètre en aval du doseur, le débit traversant le doseur peut être mesuré de façon à valider la transition 101 sans besoin d'initialisation à zéro en étape 98. Une alternative qui s'affranchit d'un débitmètre en aval du doseur, consiste à utiliser le débit estimé $\hat{Q}_{doseur}$ du doseur qui est dans ce cas, initialisé à zéro en étape 98 puis calculé dans une étape 111 expliquée ultérieurement. Dans l'exemple d'étape 108 illustrée en figure 6, la masse cumulée couramment estimée est égale à la somme de la masse cumulée précédemment estimée et de la différence entre le débit massique entrant et le débit massique sortant multipliée par la période dt qui sépare deux exécutions successives de l'étape 108. La période dt est déterminée suffisamment courte pour considérer constante la différence de débit entre deux échantillonnages successifs. Pour fixer un ordre de grandeur, on voit souvent dans les processus temps réels une valeur dt égale à 20 ms.

La transition 102 active une étape 109 ordonnancée pour calculer une valeur temps réel de pression estimée $\hat{P}_{aval\_compr}$ de gaz accumulée entre la sortie du compresseur 8 et l'entrée du doseur 10. La valeur de la constante R des gaz parfaits étant connue, l'utilisation de la loi de Mariotte et de la loi universelle d'Avogadro, donne une pression estimée proportionnelle à la masse accumulée $\hat{m}$ multipliée par la température de suralimentation $T_{sural}$ exprimée en degrés Kelvin et la constante R que divise le volume V. Le système d'unités est bien entendu adapté, à titre d'exemple purement illustratif, la masse accumulée $\hat{m}$ est un nombre adimensionnel obtenu en divisant une masse mesurée ou calculée en Kg par la masse molaire de la composition gazeuse de l'air exprimée en Kg.

Les moteurs suralimentés disposent plus souvent d'un capteur de pression monté entre le doseur et l'entrée de la chambre de combustion que d'un débitmètre à ce niveau. C'est typiquement le cas du capteur 53b qui mesure la pression de suralimentation $P_{sural}$. L'étape 111 est alors activée par une transition 104 qui est validée par un échantillonnage de la pression $P_{sural}$.

Dans l'étape 111, l'estimée de débit $\hat{Q}_{doseur}$ est calculée au moyen de la formule :

$$\hat{Q}_{doseur} := A * \hat{S}_{doseur} * \frac{\hat{P}_{aval\_compr}}{\sqrt{T_{sural}}} * \Phi\left(\frac{P_{sural}}{\hat{P}_{aval\_compr}}\right)$$

où $\phi$ est une fonction solution des équations de Barré de Saint Venant et $\hat{S}_{doseur}$ est une estimée de section efficace du doseur.

On connaît de nombreuses fonctions de Barré de Saint Venant selon les domaines d'écoulement considérés. Dans le cas présent, on indique à titre essentiellement illustratif, la formule suivante :

$$\Phi\left(\frac{P_{sural}}{\hat{P}_{aval\_compr}}\right) = \sqrt{1 - \left(\frac{P_{sural}}{\hat{P}_{aval\_compr}}\right)^{\frac{\gamma-1}{\gamma}}}$$

où $\gamma$ est le coefficient adiabatique bien connu des gaz parfaits.

L'ouverture et par conséquent la section efficace du doseur peut dans certains cas, être directement proportionnelle à la consigne Dos* en sortie du filtre $F_2$. C'est le cas par exemple d'un doseur actionné par un moteur pas à pas pour lequel la position du volet est une image fidèle de la consigne appliquée sur l'actionneur. C'est le cas par exemple encore d'un doseur régulé localement en boucle fermée avec une contre-réaction locale sur la consigne d'ouverture donnée par le filtre $F_2$. En négligeant les régimes transitoires d'atteinte de consigne et en faisant intervenir un facteur d'échelle approprié dans la constante A, on peut se contenter d'une formule de type :

$$\hat{Q}_{doseur} := A * Dos^{*} * \frac{\hat{P}_{aval\_compr}}{\sqrt{T_{sural}}} * \Phi\left(\frac{P_{sural}}{\hat{P}_{aval\_compr}}\right)$$

Le procédé est plus robuste contre les pannes et plus fidèle en temps réel si on estime la section efficace à partir du capteur 54 rendu disponible à cet effet. C'est alors qu'intervient la transition 103 associée à la fonction Cartog mémorisée en étape 98 pour activer une étape 110.

Dans l'étape 110, une estimée de section efficace de doseur $\hat{S}_{doseur}$ est calculée en faisant correspondre la position d'ouverture de doseur $POS_{doseur}$ mesurée à la section efficace donnée par la cartographie du doseur.

La transition 107 validée par un top d'horloge dans un intervalle de temps dt suivant, réactive la série de transitions et d'étapes 101, 108, 102, 109 et si besoin 103, 110, 104 et 111 de sorte que la valeur de pression avale estimée converge en temps réel vers la pression avale effective pour un débit $Q_{débimètre}$ traversant le compresseur et une température $T_{sural}$ en aval du compresseur.

L'invention telle que décrite ci-dessus présente différents avantages, parmi lesquels celui de pouvoir contrer le phénomène de pompage du compresseur en utilisant les capteurs dont on dispose de façon standard dans le moteur ou en n'ajoutant qu'un nombre minimal de capteurs, économisant ainsi le câblage et les contrôles de pannes ; celui de contrôler le phénomène de pompage par les causes directes, rapports de pressions, de débits et de température en amont et en aval du compresseur et de couvrir ainsi un plus large éventail des causes lointaines, quelque soient leurs répercussion sur les causes directes qui elles, sont mesurées ou estimées quelque soit le cas de figure ; et celui d'un procédé modulable dans lequel une étape estimant une valeur pour laquelle il existe un capteur de mesure peut être court-circuitée ou utilisée afin de vérifier le bon fonctionnement du capteur.

## Revendications

1. Moteur thermique comprenant une chambre de combustion (1), un compresseur (8) pour comprimer un gaz extérieur à admettre en entrée de la chambre de combustion (1), un circuit de recirculation de gaz d'échappement afin de réinjecter une partie des gaz d'échappement en entrée de la chambre de combustion (1) et une vanne de régulation (14) disposée dans le circuit de recirculation et commandée par un boîtier électronique (60) de façon à réguler un débit massique de gaz réinjectés, **caractérisé en ce que** le boîtier électronique est agencé pour ne pas dépasser un débit massique maximal de gaz réinjectés en fonction d'un débit massique minimal de gaz extérieur en deçà duquel le compresseur a tendance à pomper et **en ce que** le boîtier électronique est agencé pour calculer le débit massique minimal de gaz extérieur en fonction d'un taux de compression du compresseur scruté en temps réel de façon à ne pas franchir une limite de pompage.

2. Moteur selon la revendication 1, **caractérisé en ce qu'**il comprend un capteur (55) de vitesse de rotation et **en ce que** le boîtier (60) dispose de ressources de calcul ordonnancées pour calculer une consigne de débit massique maximal de gaz réinjectés en divisant une première valeur représentative d'une puissance maximale de re-circulation par une température de gaz réinjectés, ladite première valeur étant obtenue en soustrayant d'une deuxième valeur représentative d'une puissance totale d'admission proportionnelle à la vitesse de rotation mesurée, une troisième valeur proportionnelle au débit massique minimal de gaz extérieur.

3. Moteur selon la revendication 2, **caractérisé en ce qu'**il comprend un capteur (53b) de pression de suralimentation et **en ce que** ladite deuxième valeur comprend un produit de la pression de suralimentation mesurée par ladite vitesse de rotation.

4. Moteur selon la revendication 2, **caractérisé en ce qu'**il comprend un capteur (53a) de température de suralimentation et **en ce que** ladite troisième valeur comprend un produit de la température de suralimentation mesurée par ledit débit massique minimal de gaz extérieur.

5. Moteur selon l'une des revendications précédentes **caractérisé en ce qu'**il comprend un capteur (52) de pression en amont du compresseur et **en ce que** le boîtier (60) dispose de ressources de calcul ordonnancées pour calculer le taux de compression scruté en divisant une pression en aval du compresseur par une pression mesurée au moyen du capteur de pression (52).

6. Procédé pour suralimenter un moteur par des gaz comprimés au moyen d'un compresseur et par des gaz réinjectés en régulant un débit massique de gaz réinjectés au moyen d'une vanne de régulation, **caractérisé en ce qu'**il comprend une étape limitative (124) dans laquelle une consigne de débit massique maximal de gaz réinjectés est calculée en fonction d'un débit massique minimal de gaz extérieur en deçà duquel le compresseur a tendance à pomper et **en ce que** le débit massique minimal de gaz extérieur est calculé en fonction d'un taux de compression du compresseur scruté en temps réel de façon à ne pas franchir une limite de pompage.

7. Procédé selon la revendication 6, **caractérisé en ce que** la consigne de débit massique maximal de gaz réinjectés est égale à une première valeur représentative d'une puissance maximale de recirculation divisée par une température de gaz réinjectés, ladite première valeur étant obtenue en soustrayant d'une deuxième valeur représentative d'une puissance totale d'admission proportionnelle à une vitesse de rotation du moteur, une troisième valeur proportionnelle au débit massique minimal de gaz extérieur.

8. Procédé selon la revendication 7, **caractérisé en ce que** ladite deuxième valeur comprend un produit d'une pression de suralimentation mesurée et de ladite vitesse de rotation.

9. Procédé selon la revendication 7 ou la revendication 8, **caractérisé en ce que** ladite troisième valeur comprend un produit de la température de suralimentation mesurée et dudit débit massique minimal de gaz extérieur.

10. Procédé selon l'une des revendications 6 à 9, **caractérisé en ce qu'**il comprend une étape adaptative dans laquelle le taux de compression est calculé en divisant une pression en aval du compresseur par une pression mesurée en amont du compresseur.


**Patentansprüche**

1. Brennkraftmaschine, die eine Brennkammer (1), einen Verdichter (8) zum Verdichten eines äußeren Gases, das am Eingang der Brennkammer (1) einzulassen ist, einen Abgasrezirkulationskreislauf zum Wiedereinspritzen eines Teils der Abgase am Eingang der Brennkammer (1) und ein Regelventil (14) umfasst, das in dem Rezirkulationskreislauf angeordnet ist und von einem elektronischen Gehäuse (60) derart gesteuert wird, dass ein Massendurchsatz an wiedereingespritzten Gasen geregelt wird, **dadurch gekennzeichnet, dass** das elektronische Gehäuse eingerichtet ist, um einen maximalen Massenstrom an wiedereingespritzten Gasen in Abhängigkeit von einem Mindestmassenstrom an äußeren Gasen, über welchen hinaus der Verdichter zum Pumpen tendiert, nicht zu überschreiten, und dass das elektronische Gehäuse eingerichtet ist, um den Mindestmassendurchsatz an äußeren Gasen in Abhängigkeit von einer Verdichtungsrate des Verdichters, die in Echtzeit abgetastet wird, derart zu berechnen, dass ein Pumplimit nicht überschritten wird.

**2.** Maschine nach Anspruch 1, **dadurch gekennzeichnet, dass** sie einen Drehzahlsensor (55) umfasst, und dass das Gehäuse (60) über Rechenressourcen verfügt, die organisiert sind, um einen maximalen Massendurchsatzsollwert an wiedereingespritzten Gasen zu berechnen, indem ein erster Wert, der für eine maximale Rezirkulationsleistung repräsentativ ist, durch eine Temperatur wiedereingespritzter Gase geteilt wird, wobei der erste Wert erhalten wird, indem von einem zweiten Wert, der für eine Gesamteinlassleistung anteilsmäßig zu der gemessenen Drehzahl repräsentativ ist, ein dritter Wert, der zu dem Mindestmassendurchsatz an äußerem Gas anteilsmäßig ist, abgezogen wird.

**3.** Maschine nach Anspruch 2, **dadurch gekennzeichnet, dass** sie einen Aufladedrucksensor (53b) umfasst, und dass der zweite Wert ein Produkt aus dem gemessenen Aufladedruck und der Drehzahl umfasst.

**4.** Maschine nach Anspruch 2, **dadurch gekennzeichnet, dass** sie einen Aufladetemperatursensor (53a) umfasst, und dass der dritte Wert ein Produkt aus der gemessenen Aufladetemperatur und dem Mindestmassendurchsatz an äußerem Gas umfasst.

**5.** Maschine nach einem der vorstehenden Ansprüche, **dadurch gekennzeichnet, dass** sie einen Drucksensor (52) stromaufwärts des Verdichters umfasst, und dass das Gehäuse (60) über Rechenressourcen verfügt, die organisiert sind, um die abgetastete Verdichtungsrate zu berechnen, indem ein Druck stromabwärts des Verdichters durch einen Druck, der mittels des Drucksensors (52) gemessen wird, geteilt wird.

**6.** Verfahren zum Aufladen einer Maschine durch Gase, die mittels eines Verdichters verdichtet werden, und durch wiedereingespritzte Gase, indem ein Massendurchsatz an wiedereingespritzten Gasen mittels eines Regelventils geregelt wird, **dadurch gekennzeichnet, dass** es einen Einschränkungsschritt (124) umfasst, bei dem ein maximaler Massendurchsatzsollwert an wiedereingespritzten Gasen in Abhängigkeit von einem Mindestmassendurchsatz an äußeren Gasen berechnet wird, über den hinaus der Verdichter zum Pumpen tendiert, und dass der Mindestmassenstrom an äußerem Gas in Abhängigkeit von einer Verdichtungsrate des Verdichters berechnet wird, die in Echtzeit derart abgetastet wird, dass ein Pumplimit nicht überschritten wird.

**7.** Verfahren nach Anspruch 6, **dadurch gekennzeichnet, dass** der maximale Massendurchsatzsollwert an wiedereingespritzten Gasen gleich einem ersten Wert ist, der für eine maximale Rezirkulationsleistung repräsentativ ist, geteilt durch eine Temperatur wiedereingespritzter Gase, wobei der erste Wert erhalten wird, indem ein zweiter Wert, der für eine Gesamteinlassleistung anteilsmäßig zu einer Drehzahl des Motors repräsentativ ist, von einem dritten Wert, der zu dem Mindestmassendurchsatz an äußerem Gas anteilsmäßig ist, abgezogen wird.

**8.** Verfahren nach Anspruch 7, **dadurch gekennzeichnet, dass** der zweite Wert ein Produkt aus einem gemessenen Aufladedruck und der Drehzahl umfasst.

**9.** Verfahren nach Anspruch 7 oder Anspruch 8, **dadurch gekennzeichnet, dass** der dritte Wert ein Produkt aus der gemessenen Aufladetemperatur und dem Mindestmassendurchsatz an äußerem Gas umfasst.

**10.** Verfahren nach einem der Ansprüche 6 bis 9, **dadurch gekennzeichnet, dass** es einen adaptiven Schritt umfasst, bei dem die Verdichtungsrate berechnet wird, indem ein Druck stromabwärts des Verdichters durch einen stromaufwärts des Verdichters gemessenen Druck geteilt wird.

**Claims**

**1.** A heat engine including a combustion chamber (1), a compressor (8) for compressing an exterior gas to be admitted at an inlet of the combustion chamber (1), a recirculation circuit of exhaust gas so as to reinject a portion of the exhaust gases at an inlet of the combustion chamber (1) and a control valve (14) disposed in the recirculation circuit and controlled by an electronic unit (60) so as to regulate a mass flow of reinjected gases, **characterized in that** the electronic unit is arranged so as not to exceed a maximum mass flow of reinjected gases as a function of a minimum mass flow of exterior gas below which the compressor tends to pump and **in that** the electronic unit is arranged so as to calculate the minimum mass flow of exterior gas as a function of a compression rate of the compressor scanned in real time so as not to exceed a pumping limit.

**2.** The engine according to Claim 1, **characterized in that** it includes a rotation speed sensor (55) and **in that** the unit (60) has calculation resources arranged to calculate a maximum mass flow setpoint of reinjected gases, by dividing a first representative value of a maximum power of recirculation by a temperature of reinjected gases, said first value being obtained by subtracting from a second representative value of a total admission power proportional to the measured speed of rotation, a third value proportional to the minimum mass flow of exterior gas.

3. The engine according to Claim 2, **characterized in that** it includes a boost pressure sensor (53b) and **in that** said second value includes a product of the measured boost pressure by said rotation speed.

4. The engine according to Claim 2, **characterized in that** it includes boost temperature sensor (53a) and **in that** said third value includes a product of the measured boost temperature by said minimum mass flow of exterior gas.

5. The engine according to one of the preceding claims, **characterized in that** it includes a pressure sensor (52) upstream of the compressor and **in that** the unit (60) has calculation resources arranged to calculate the scanned compression rate by dividing a pressure downstream of the compressor by a pressure measured by means of the pressure sensor (52).

6. A method for turbocharging an engine by compressed gases by means of a compressor and by reinjected gases, by regulating a mass flow of reinjected gases by means of a control valve, **characterized in that** it includes a limitative step (124), in which a maximum mass flow setpoint of reinjected gases is calculated as a function of a minimum mass flow of exterior gas below which the compressor tends to pump, and **in that** the minimum mass flow of exterior gas is calculated as a function of a compression rate of the compressor scanned in real time so as not to exceed a pumping limit.

7. The method according to Claim 6, **characterized in that** the maximum mass flow setpoint of reinjected gases is equal to a first value representative of a maximum power of recirculation divided by a temperature of reinjected gases, said first value being obtained by subtracting from a second value representative of a total admission power proportional to a rotation speed of the engine, a third value proportional to the minimum mass flow of exterior gas.

8. The method according to Claim 7, **characterized in that** said second value includes a product of a measured boost pressure and of said rotation speed.

9. The method according to Claim 7 or Claim 8, **characterized in that** said third value includes a product of the measured boost temperature and of said minimum mass flow of exterior gas.

10. The method according to one of Claims 6 to 9, **characterized in that** it includes an adaptive step in which the rate of compression is calculated by dividing a pressure downstream of the compressor by a measured pressure upstream of the compressor.

_Fig. 1_

_Fig. 2_

**CONSIGNE AIR .23.**

**BOUCLE OUVERTE +REGULATION PID .31HP.**

**UNITE DE CONTROLE DOSEUR .37.**

**DOSEUR 10.**

**UNITE DE COMMANDE VANNE .33HP.**

**VANNE HP .14.**

_Fig. 3_

**CONSIGNE PRESSION .39.**

**BOUCLE OUVERTE +REGULATION PID .43.**

**.44.**

**UNITE DE CONTROLE ACTIONNEUR .47.**

**ACTIONNEUR 22.**

**.48.**

_Fig. 4_

_Fig. 5_

ZONE DE POMPAGE

Caractéristiques Turbo

Limite Pompage

PI_C

Qcorr [Kg/s]

$$\hat{Q}_{doseur} :=$$

$$A * \hat{S}_{doseur} * \frac{\hat{P}_{aval\_compr}}{\sqrt{T_{sural}}} * \Phi\left(\frac{P_{sural}}{\hat{P}_{aval\_compr}}\right)$$

111

98

$$\hat{Q}_{doseur} := 0$$
$$\hat{m} := 0$$
$$V = paramètre$$
$$A = paramètre$$
$$Cartog = fonction$$
$$dt = période$$

+dt — 107

démarrage

— 100

103

$$Q_{débimètre}$$ — 101

$$POS_{doseur}$$

$$\hat{m} := \hat{m} + \left(Q_{débimètre} - \hat{Q}_{doseur}\right)dt$$

110  $$\hat{S}_{doseur} := Cartog(POS_{doseur})$$

$$T_{sural}$$ — 102

— 108

$$\hat{P}_{aval\_compr} := \frac{R * \hat{m} * T_{sural}}{V}$$

— 109

$$P_{sural}$$ — 104

**Fig 6**

99

$P_{ref}$ = paramètre
$T_{ref}$ = paramètre
Abaq = fonction
dt = période

107

+ dt

démarrage

100

$P_{atm} ; T_{atm}$ 105

$$\alpha \equiv \frac{Q_{\min}\left(P_{atm}, T_{atm}\right)}{Q_{corr}} := \frac{P_{atm}}{P_{ref}} \sqrt{\frac{T_{ref}}{T_{atm}}}$$ 112

$\hat{P}_{aval\_compr}$ 106

$$Q_{corr} := Abaq\left(\frac{\hat{P}_{aval\_compr}}{P_{atm}}\right)$$

$$Q_{\min} := \alpha * Q_{corr}$$

113

FIG. 7

$K_{cyl}; K_{therm} = paramètres$
$dt = période$     119

$+ dt$   107

démarrage

100

$P_{sural}; N$   120

$Q_{tot\_vol} := K_{cyl} * N$
$E_{tot\_adm} := Q_{tot\_vol} * P_{sural}$   123

$T_{sural}; Q_{min}$   121

$E_{max\,EGR} := E_{tot\_adm} - K_{therm} * T_{sural} * Q_{min}$   124

$T_{EGR}$   122

$Q_{max\,EGR} := \dfrac{E_{max\,EGR}}{K_{therm} * T_{EGR}}$   125

Fig. 8

**Fig. 9**

**EP 2 045 456 B1**

## RÉFÉRENCES CITÉES DANS LA DESCRIPTION

### Documents brevets cités dans la description

- US 20070012030 A
- US 7089738 B1